# EUROPÄISCHE PATENTSCHRIFT

(11) **EP 3 554 982 B1**
(45) Veröffentlichungstag und Bekanntmachung des Hinweises auf die Patenterteilung: **17.02.2021**
(21) Anmeldenummer: 17821802.0
(22) Anmeldetag: 01.12.2017
(51) Int. Cl.: B66B 23/10, F16H 7/06, B66B 25/00, B66B 23/02

(54) **PERSONENTRANSPORTEINRICHTUNG MIT EINER GESCHWINDIGKEITSMESSVORRICHTUNG**
PASSENGER TRANSPORTING DEVICE WITH A SPEED DETECTION DEVICE
DISPOSITIF DE TRANSPORT DE PERSONNES COMPRENANT UN DISPOSITIF DE MESURE DE VITESSE

(30) Priorität: 16.12.2016 EP 16204592
(43) Veröffentlichungstag der Anmeldung: 23.10.2019
(73) Patentinhaber: Inventio AG, 6052 Hergiswil (CH)
(72) Erfinder: PRENNER, Alexander, 7033 Pöttsching (AT); KLEEWEIN, Gerhard, 3021 Pressbaum (AT)
(86) Internationale Anmeldenummer: PCT/EP2017/081093
(87) Internationale Veröffentlichungsnummer: WO 2018/108560

(56) Entgegenhaltungen:
- CN-U- 202 609 747
- US-A1- 2007 012 547

## Beschreibung

Die Erfindung betrifft eine Personentransporteinrichtung die als Fahrtreppe oder Fahrsteig ausgebildet ist. Diese weist mindestens ein Antriebskettenrad zum Antreiben und Umlenken eines Transportbandes auf, sowie mindestens eine Erfassungseinrichtung zur Erfassung der Drehgeschwindigkeit des Antriebskettenrades.

Personentransporteinrichtungen der vorgenannten Art sind beispielsweise aus der CN 202609747 U bekannt. Zur Erfassung der Drehgeschwindigkeit und Drehrichtung des Antriebskettenrades sind zwei Sensoren vorgesehen, welche auf die Zähne beziehungsweise die Zahnlücken des Antriebskettenrades gerichtet sind und diese berührungslos abtasten. Aus den Abtastungssignalen der beiden Sensoren kann die Drehrichtung sowie die Drehgeschwindigkeit des Antriebskettenrades beziehungsweise dessen Umfangsgeschwindigkeit und damit direkt die Transportbandgeschwindigkeit der Fahrtreppe oder des Fahrsteiges erfasst werden. Ein besonderer Vorteil dieser Lösung gegenüber beispielsweise mit dem Antriebskettenrad gekoppelten Inkremental-Drehgebern besteht darin, dass diese ausgesprochen kostengünstig ist, da außer den Sensoren und deren Befestigungsmittel keine zusätzlichen Teile wie Kupplungselemente und bewegte Teile zur Übertragung der Drehbewegung notwendig sind. Nachteilig an dieser Lösung ist jedoch die exponierte Lage der Sensoren im Hinblick auf Schmiermittel der am Antriebskettenrad anliegenden Antriebskette und insbesondere von metallischem Abrieb infolge von Verschleiß zwischen der Antriebskette und dem Antriebskettenrad.

Dieser Abrieb kann zusammen mit Staub, Schmutz und Schmiermitteln an den Sensorköpfen anhaften und fehlerhafte Signale verursachen. US 2007/012547 A1 offenbart eine Personentransporteinrichtung die als Fahrtreppe oder Fahrsteig ausgebildet ist, implizit aufweisend mindestens ein Antriebskettenrad zum Antreiben und Umlenken eines Transportbandes und weiter aufweisend mindestens eine Erfassungseinrichtung zur Erfassung der Drehgeschwindigkeit des Antriebskettenrades.

Die Aufgabe der vorliegenden Erfindung besteht somit darin, eine Erfassungseinrichtung bereitzustellen, die zwar ebenso kostengünstig, aber dennoch zuverlässig und störungsfrei die Drehgeschwindigkeit des Antriebskettenrades erfassen kann.

Diese Aufgabe wird gelöst durch eine Personentransporteinrichtung die als Fahrtreppe oder Fahrsteig ausgebildet ist. Diese weist mindestens ein Antriebskettenrad zum Antreiben und Umlenken eines Transportbandes, sowie mindestens eine Erfassungseinrichtung zur Erfassung der Drehgeschwindigkeit des Antriebskettenrades auf. An mindestens einer ringförmigen Seitenfläche des Antriebskettenrades sind schlitzförmige Ausnehmungen angeordnet, wobei die Längserstreckung der schlitzförmigen Ausnehmungen sich bezogen auf den Rotationsmittelpunkt des Antriebskettenrades in radialer Richtung zumindest teilweise über die ringförmige Seitenfläche erstrecken. Durch die Erfassungseinrichtung ist mittels einer Abtastung der relativ zur Erfassungseinrichtung bewegbaren schlitzförmigen Ausnehmungen und der zwischen den Ausnehmungen vorhandenen Erhebungen ein die Drehgeschwindigkeit des Antriebskettenrades repräsentierendes Signal erzeugbar. Sobald das Antriebskettenrad dreht, bewegen sich die schlitzförmigen Ausnehmungen und die Erhebungen an der Erfassungseinrichtung beziehungsweise an deren mindestens einen Sensor vorbei, so dass dieser im Wesentlichen einen Rechteck- oder wellenförmigen Signalverlauf abgibt. Aus der Amplitudenbreite des Signalverlaufs kann in einer Signalverarbeitungseinheit die Geschwindigkeit errechnet, und diese Geschwindigkeitswerte an eine Steuerung der Personentransporteinrichtung übermittelt werden.

Die an der ringförmigen Seitenfläche angeordneten schlitzförmigen Ausnehmungen beziehungsweise Erhebungen ermöglichen einen wesentlich störungsärmeren Betrieb, als wenn die Zähne des Antriebskettenrades abgetastet werden. Zum einen führt die Anordnung an der ringförmigen Seitenfläche dazu, dass der mindestens ein Sensor der Erfassungseinrichtung nicht mehr unmittelbar dem Schmiermittel und Metallabrieb der Antriebskette ausgesetzt ist. Zum anderen hat sich aber auch gezeigt, dass durch die radiale Anordnung der schlitzförmigen Ausnehmungen beziehungsweise der dadurch gebildeten steg-, rippen- oder lamellenförmigen Erhebungen ein Reinigungseffekt des Sensorkopfes auftritt, wenn das Antriebskettenrad dreht. Dieser Reinigungseffekt ist auf die in den schlitzförmigen Ausnehmungen herrschende Luftströmung zurückzuführen. Durch die Luftströmung wird Staub und Schmutz vom Sensorkopf gelöst und unter Mithilfe der Zentrifugalkraft aus dem Erfassungsbereich des Sensors befördert.

Je grösser die relative Geschwindigkeit zwischen dem Sensorkopf und den schlitzförmigen Ausnehmungen ist, desto stärker ist die Luftströmung. Vorteilhafterweise ist die ringförmige Seitenfläche daher möglichst nahe des äußersten Durchmessers des Antriebskettenrades angeordnet.

Um einen möglichst regelmäßigen Signalverlauf zu erhalten, weisen vorzugsweise alle schlitzförmigen Ausnehmungen dieselbe Schlitzform auf.

Um den Reinigungseffekt zu verstärken, können die schlitzförmigen Ausnehmungen über ihre gesamte Längserstreckung einen strömungsoptimierten Querschnitt aufweisen, indem Flächenübergänge der schlitzförmigen Ausnehmungen mit Ausrundungen versehen sind. Je nach Ausgestaltung zirkuliert die Luft innerhalb der schlitzförmigen Ausnehmungen oder sie durchströmt die schlitzförmigen Ausnehmungen in radialer Richtung beziehungsweise vom inneren Durchmesser der ringförmigen Seitenfläche hin zum äußeren Durchmesser der ringförmigen Seitenfläche.

Auch die eigentlichen Abmessungen der schlitzförmigen Ausnehmungen beziehungsweise der dadurch gebildeten Erhebungen können zur Erzielung eines Reinigungseffektes entscheidend sein. Vorzugsweise weisen die schlitzförmigen Ausnehmungen eine Schlitzbreite von 3mm bis 10mm, eine Schlitzlänge von 25mm bis 60mm und eine Schlitztiefe von 5mm bis 15mm auf.

Die schlitzförmigen Ausnehmungen können beispielsweise mittels spanabhebender Bearbeitungsverfahren wie zum Beispiel durch Fräsen in der ringförmigen Seitenfläche erzeugt werden. Die schlitzförmigen Ausnehmungen können aber auch durch eine Vielzahl an der ringförmigen Seitenfläche angeordnete, als Erhebungen dienende Lamellen, beispielsweise durch Guss- oder Schmiedeverfahren gebildet sein.

Die Erhebungen können beispielsweise eine Breite von 3mm bis 20mm, eine Länge von 25mm bis 60mm und eine Tiefe von 5mm bis 15mm aufweisen.

Um einen möglichst regelmäßigen Signalverlauf zu erhalten, weisen vorzugsweise alle Erhebungen dieselbe Form beziehungsweise Gestalt auf. Sofern nicht nur die Drehgeschwindigkeit des Antriebskettenrades, sondern auch die Drehrichtung ermittelt werden soll, sind bei der Verwendung gleicher schlitzförmiger Ausnehmungen und gleicher Erhebungen zwei Sensoren erforderlich. Diese werden derart zueinander angeordnet, dass deren Abstand ungleich der Teilung oder einer Vielzahl von Teilungen von schlitzförmigen Ausnehmungen und Erhebungen ist. Das heißt, dass in einer bestimmten Stellung des Antriebskettenrades zur Erfassungseinrichtung der erste Sensorkopf genau zwischen zwei Erhebungen auf die Mitte der dazwischenliegenden schlitzförmigen Ausnehmungen gerichtet ist, während der zweite Sensor auf die Kante gerichtet ist, welche die schlitzförmige Ausnehmung von der angrenzenden Erhebung abgrenzt.

Es besteht jedoch auch die Möglichkeit, mit nur einem Sensor die Geschwindigkeit und die Drehrichtung zu erfassen. Hierbei sind die Erhebungen vorzugsweise in drei Gruppen mit unterschiedlicher Breite aufgeteilt. Die unterschiedlich breiten Erhebungen sind alternierend an der ringförmigen Seitenfläche angeordnet, wobei jeweils eine Erhebung der ersten Breite gefolgt von einer Erhebung der zweiten Breite und gefolgt von einer Erhebung der dritten Breite usw. am Antriebskettenrad angeordnet sind. Der bei der Messung resultierende Signalverlauf weist nun unterschiedliche Amplitudenbreiten auf, so dass nach der Erfassung einer Abfolge von drei Erhebungen die Drehrichtung und die momentane Drehgeschwindigkeit aus dem Signalverlauf errechnet werden kann. Dabei muss die Breitendifferenz der Erhebungen derart gewählt werden, dass bei einer maximalen Beschleunigung beziehungsweise Verzögerung der Drehgeschwindigkeit des Antriebskettenrades die erfasste Breite der nachfolgenden Erhebung nicht die Breite der vorangehenden Erhebung unterschreitet, so dass eine falsche Drehrichtung ermittelt wird.

In einer weiteren Ausgestaltung der Erfindung weist das Antriebskettenrad einen scheibenförmigen Radkörper und einen in axialer Richtung vom scheibenförmigen Radkörper überstehenden Außenring auf. Die Erhebungen der ringförmigen Seitenfläche können zur Versteifung des Übergangs zwischen dem Außenring und dem Radkörper angeordnet sein. Durch die Anordnung der Erhebungen als Versteifungsrippen im Übergang sind diese zusätzlich vor Schmiermitteln, Staub, Schmutz und Metallabrieb-Partikeln geschützt.

Aufgrund der durch die Erhebungen versteiften, aber dennoch für den Kraftfluss im Antriebskettenrad günstig ausgestalteten Übergang zwischen dem Außenring und dem Radkörper, kann der Außenring erhebliche Belastungen aufnehmen. Vorzugsweise ist daher umfangseitig am Außenring eine Verzahnung zum Eingriff in eine Antriebskette ausgebildet.

Ein solches Antriebskettenrad kann beispielsweise mittels eines Gießverfahrens hergestellt sein, wobei die Erhebungen mitgegossen sind. Da die Gussoberfläche, insbesondere bei Sandguss üblicherweise etwas rau ist, kann diese unregelmäßige GussOberfläche zu störenden Effekten bei der Abtastung führen. Vorzugsweise werden deshalb mittels eines spanabhebenden Bearbeitungsverfahrens die Erhebungen parallel zur ringförmigen Seitenfläche bearbeitet.

Um den Strömungseffekt und damit den Reinigungseffekt zu optimieren, kann zumindest ein Strömungsleitkörper vorhanden sein, der die in seinem Bereich vorhandenen schlitzförmigen Ausnehmungen teilweise überdeckt und dadurch Ventilationskanäle bildet. Der Strömungsleitkörper kann zudem als Halterung beziehungsweise Aufnahme für die Sensoren der Erfassungseinrichtung dienen.

Die Erfassungseinrichtung beinhaltet mindestens einen Sensor, dessen Signal direkt oder aufbereitet an eine Steuerung der Personentransporteinrichtung übermittelbar ist. Das heißt, dass entweder die Rohsignale des Sensors an die Steuerung übermittelt werden und dann in einer Recheneinheit der Steuerung weiterverarbeitet und ausgewertet werden. Oder der verwendete Sensor weist eine eigene Recheneinheit auf, die aus dem erfassten Rohsignal die Geschwindigkeitsinformation und/oder Drehrichtungsinformation errechnet und diese Informationen beziehungsweise Daten kontinuierlich oder sequentiell an die Steuerung übermittelt.

Die Erfassungseinrichtung weist vorzugsweise eine Schnittstelle zu einem Busknoten eines Bussystems der Personentransporteinrichtung auf. Dieses Bussystem ist mit der Steuerung der Personentransporteinrichtung verbunden, so dass die Signale und/oder Daten der Erfassungseinrichtung über dieses Bussystem an die Steuerung übermittelt werden können.

Es wird darauf hingewiesen, dass einige der möglichen Merkmale und Vorteile der Erfindung hierin mit Bezug auf unterschiedliche Ausführungsformen beschrieben sind. Ein Fachmann erkennt, dass die Merkmale in geeigneter Weise kombiniert, angepasst oder ausgetauscht werden können, um zu weiteren Ausführungsformen der Erfindung zu gelangen.

Nachfolgend werden Ausführungsformen der Erfindung unter Bezugnahme auf die beigefügten Zeichnungen beschrieben, wobei weder die Zeichnungen noch die Beschreibung als die Erfindung einschränkend auszulegen sind.
Figur 1 zeigt eine Übersichtsansicht einer Fahrtreppe.
Figur 2 zeigt in dreidimensionaler Ansicht das Antriebskettenrad aus der Figur 1 sowie eine mögliche Anordnung der Erfassungseinrichtung.
Figur 3 veranschaulicht in geschnittener Darstellung die bereits in der Figur 2 erkennbare erste mögliche Ausgestaltung der schlitzförmigen Ausnehmungen und der dazwischenliegenden Erhebungen.
Figur 4 veranschaulicht eine zweite mögliche Ausgestaltung der schlitzförmigen Ausnehmungen und der dazwischenliegenden Erhebungen.
Figur 5 veranschaulicht eine dritte mögliche Ausgestaltung der schlitzförmigen Ausnehmungen und der dazwischenliegenden Erhebungen.

Die Figuren sind lediglich schematisch und nicht maßstabsgetreu. Gleiche Bezugszeichen bezeichnen in den verschiedenen Figuren gleiche oder gleichwirkende Merkmale

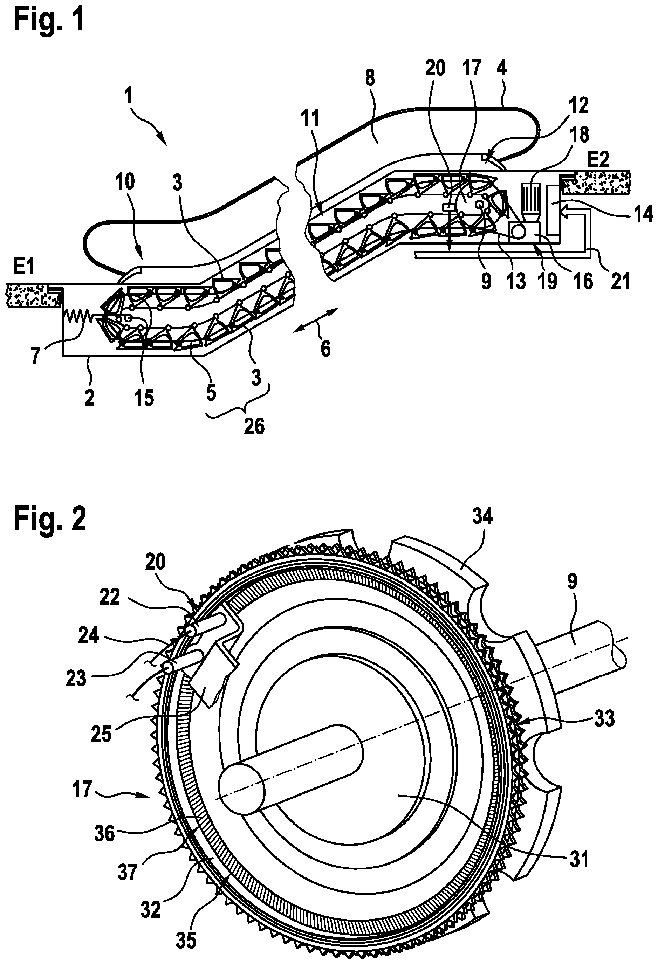

Figur 1 zeigt eine beispielhaft als Fahrtreppe 1 ausgestaltete Personentransporteinrichtung 1, mithilfe derer Personen beispielsweise zwischen zwei Niveaus E1, E2 befördert werden können. Selbstverständlich kann die vorliegende Erfindung auch in einem Fahrsteig 1 verwendet werden.

Die Personentransporteinrichtung 1 weist ein Transportband 26 mit mehreren Trittstufen 3 auf, die hintereinander angeordnet sind und die mithilfe zweier ringförmig geschlossener und in horizontaler Richtung zueinander paralleler Förderketten 5 (in Figur 1 nur eine sichtbar) in entgegengesetzten Bewegungsrichtungen 6 entlang eines Verfahrweges verlagert werden können. Jede Trittstufe 3 ist dabei nahe ihren seitlichen Enden an jeweils einer der Förderketten 5 befestigt. Um die Förderketten 5 verlagern zu können, verfügt die Personentransporteinrichtung 1 über eine Antriebsanordnung 19 (welche in Figur 1 lediglich sehr schematisch angedeutet ist) mit zumindest einem angetriebenen Antriebskettenrad 17 (in Figur 1 nur eines sichtbar). Die Antriebsanordnung ist üblicherweise im oberen Niveau E2 angeordnet, während im unteren Niveau E1 eine nur schematisch dargestellte Spannstation 7 mit den Umlenkkettenrädern 15 (in Figur 1 nur eines sichtbar) angeordnet ist. Die Antriebs- und Umlenkkettenräder 15, 17 sowie weitere tragende Komponenten der Fahrtreppe 1 sind an einer tragenden Struktur 2 meist in Form einer Fachwerkstruktur gehalten, die in Figur 1 aus Gründen der Übersichtlichkeit nur als Umriss dargestellt ist. Die Fahrtreppe 1 verfügt ferner über zwei Balustraden 8 (nur eine sichtbar), an denen je ein Handlauf 4 umlaufend angeordnet ist.

Die Trittstufen 3 werden dabei während einer aufwärtsfördernden Tätigkeit im Vorlauf von einem unteren horizontal verlaufenden Bereich 10 angrenzend an das untere Niveau E1 über einen mittleren geneigt verlaufenden Bereich 11 bis hin zu einem oberen horizontal verlaufenden Bereich 12 angrenzend an das obere Niveau E2 bewegt und dann im Rücklauf in entgegengesetzter Richtung zurückbewegt.

Die Antriebseinheit 19 weist einen Antriebsmotor 18 auf, der mittels einer Steuerung 14 angesteuert und geregelt wird. Das Drehmoment beziehungsweise die Drehbewegung der Motorwelle (durch das Getriebe verdeckt) des Antriebsmotors 18 wird über ein Getriebe 16 und eine Antriebskette 13 auf das Antriebskettenrad 17 übertragen. Da üblicherweise zwei Förderketten 5 vorhanden sind, zwischen denen die Trittstufen 3 angeordnet werden, müssen auch zwei Antriebskettenräder 17 vorhanden sein. Diese sind mittels einer Antriebswelle 9 miteinander verbunden.

Des Weiteren ist die Personentransporteinrichtung 1 mit einer Erfassungseinrichtung 20 zur Erfassung zumindest der Drehgeschwindigkeit des Antriebskettenrades 17 ausgerüstet. Diese Erfassungseirichtung 20 ist über ein Bussystem 21 mit der Steuerung 14 verbunden.

Figur 2 zeigt in dreidimensionaler Ansicht das Antriebskettenrad 17 aus der Figur 1 sowie eine mögliche Anordnung der Erfassungseinrichtung 20. Das Antriebskettenrad 17 weist einen scheibenförmigen Radkörper 31 und einen in axialer Richtung vom scheibenförmigen Radkörper 31 überstehenden Außenring 32 auf. Umfangseitig ist am Außenring 32 eine Verzahnung 33 zum Eingriff in die in der Figur 1 dargestellte Antriebskette 13 ausgebildet. Des Weiteren weist das Antriebskettenrad 17 eine Förderkettenverzahnung 34 zur Aufnahme und Umlenkung der Förderkette 5 auf.

An einer ringförmigen Seitenfläche 35 des Antriebskettenrades 17 beziehungsweise des scheibenförmigen Radkörpers 31, sind schlitzförmige Ausnehmungen 37 angeordnet, wobei die Längserstreckung der schlitzförmigen Ausnehmungen 37 sich bezogen auf den Rotationsmittelpunkt des Antriebskettenrades 17 beziehungsweise die Rotationsachse der Antriebswelle 9 in radialer Richtung über die ringförmige Seitenfläche 35 erstrecken. Zwischen den schlitzförmigen Ausnehmungen 37 sind Erhebungen 36 vorhanden.

Die Erhebungen 36 der ringförmigen Seitenfläche 35 sind zur Versteifung des Übergangs zwischen dem Außenring 32 und dem Radkörper 31 angeordnet. Durch die Anordnung der Erhebungen 36 als Versteifungsrippen im Übergang sind diese zusätzlich vor Schmiermitteln, Staub, Schmutz und Metallabrieb-Partikeln geschützt.

Die Erfassungseinrichtung 20 weist eine Halterung 25 auf, in welcher zwei Sensoren 22, 23 angeordnet sind. Diese Sensoren 22, 23 können optische Sensoren, induktive Sensoren und dergleichen mehr sein. Grundsätzlich spielt es keine Rolle, nach welchem Erfassungsprinzip die Sensoren 22, 23 arbeiten. Sie müssen lediglich in der Lage sein, die schlitzförmigen Ausnehmungen 37 von den dazwischenliegenden Erhebungen 36 zu unterscheiden und deren relative Bewegung zum Sensor 22, 23 zu erfassen, wenn sich das Antriebskettenrad 17 dreht. Ferner spielt es für die vorliegende Erfindung auch keine Rolle, wie das erfasste Rohsignal der Sensoren 22, 23 aufbereitet und weiterverarbeitet wird. Es muss durch die Erfassung und Verarbeitung zumindest die momentane Rotationsgeschwindigkeit des Antriebskettenrades 17, gegebenenfalls auch Veränderungen der Rotationsgeschwindigkeit und die Drehrichtung des Antriebskettenrades 17 ermittelbar und der Steuerung 14 über Signalleitungen 24, das oben erwähnte Bussystem 21 oder kabellos zuführbar sein.

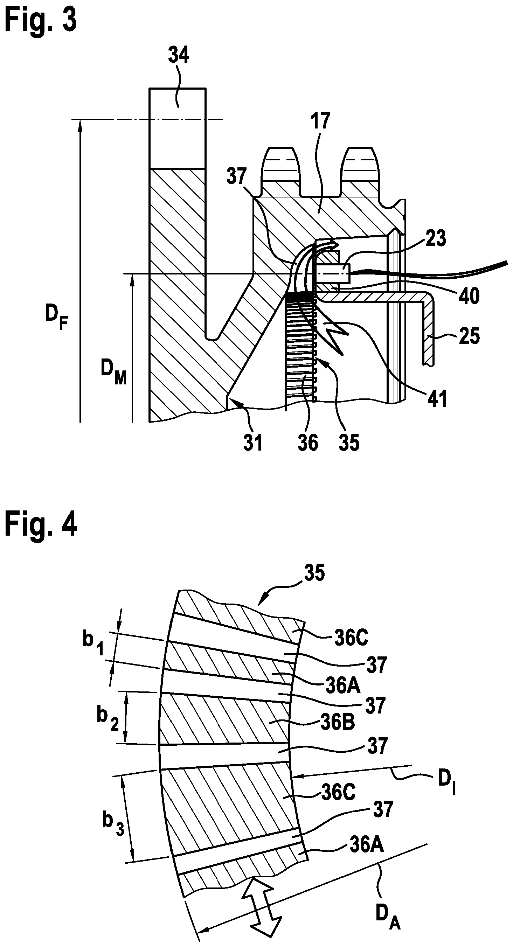

Figur 3 veranschaulicht in geschnittener Darstellung die bereits in der Figur 2 erkennbare erste mögliche Ausgestaltung der schlitzförmigen Ausnehmungen 37 und der dazwischenliegenden Erhebungen 36 des Antriebskettenrades 17. Aus der Figur 3 wird deutlich, dass der Teilkreisdurchmesser D_{F} der Förderkettenverzahnung 34 nahezu dem mittleren Durchmesser D_{M} der ringförmigen Seitenfläche 35 und damit dem Erfassungskreis des Sensors 23 entspricht. Aufgrund dieser sehr direkten Abnahme kann an die Steuerung 14 eine hochpräzise Geschwindigkeitsinformation beziehungsweise das zugehörende Sensorsignal übermittelt werden, ohne dass Elastizitäten und Schwingungen das Sensorsignal beeinflussen.

Ferner ist aus der Figur 3 auch das Zusammenwirken der schlitzförmigen Ausnehmungen 37, der Erhebungen 36 und eines Strömungsleitkörpers 40 erkennbar, wobei der Strömungsleitkörper 40 Teil der Halterung 25 ist. Die Halterung 25 ist ortsfest montiert, so dass bei einer Drehung des Antriebskettenrades 17 die Erhebungen 36 und schlitzförmigen Ausnehmungen 37 an der Halterung 25 vorbeiziehen. Dabei werden sie durch den Kopf des Sensors 23 erfasst. Die den Erhebungen 36 zugewandte Seite des Halters 25 beziehungsweise Strömungsleitkörpers 40 ist dicht über den Erhebungen 36 angeordnet und bildet mit den schlitzförmigen Ausnehmungen 37 Ventilationskanäle. Wenn sich das Kettenrad 17 dreht, schaufeln die Erhebungen 36, einem Radialverdichter gleich, Luft 41 durch die Ventilationskanäle. Durch diese Luftströmung 41 werden die schlitzförmigen Ausnehmungen 37 und die im Halter 25 beziehungsweise im Strömungskörper 40 eingelassenen Köpfe der Sensoren 22, 23 automatisch gereinigt. Sowohl der Strömungsleitkörper 40 als auch die schlitzförmigen Ausnehmungen 37 sind strömungsoptimiert ausgebildet. Wie aus der Figur 3 ersichtlich ist, sind mittels eines spanabhebenden Bearbeitungsverfahrens die Erhebungen 36 parallel zur ringförmigen Seitenfläche 35 beziehungsweise zu einer vertikalen Ebene des Radkörpers 31 bearbeitet worden, um Ventilationsverluste zu minimieren.

Im vorliegenden Ausführungsbeispiel der Figur 2 und 3 soll nicht nur die Drehgeschwindigkeit des Antriebskettenrades 17, sondern auch dessen Drehrichtung ermittelt werden. Da gleiche schlitzförmige Ausnehmungen 37 und gleiche Erhebungen 36 verwendet werden, sind zwei Sensoren 22, 23 erforderlich. Diese werden derart zueinander angeordnet, dass ihr Abstand ungleich der Teilung oder einer Mehrzahl von Teilungen der schlitzförmigen Ausnehmungen 37 und Erhebungen 36 ist. Das heißt, dass in einer bestimmten Stellung des Antriebskettenrades 17 zur Erfassungseinrichtung 20, der Kopf des ersten Sensors 22 genau zwischen zwei Erhebungen 36 auf die Mitte der dazwischenliegenden schlitzförmigen Ausnehmung 37 gerichtet ist, während der Kopf des zweiten Sensors 23 auf die in radialer Richtung sich erstreckende Kante gerichtet ist, welche die schlitzförmige Ausnehmung 37 von der angrenzenden Erhebung 36 abgrenzt. Die von den Sensoren 22, 23 erfassten Signalverläufe weisen dadurch eine Phasenverschiebung ihrer Amplituden zueinander auf, so dass aus dieser Phasenverschiebung die Drehrichtung ermittelt werden kann.

Figur 4 veranschaulicht eine zweite mögliche Ausgestaltung der schlitzförmigen Ausnehmungen 37 und der dazwischenliegenden Erhebungen 36. Dargestellt ist nur ein Segment der ringförmigen Seitenfläche 35. Der besseren Übersicht wegen sind die Erhebungen 36 im Schnitt dargestellt und aus Unterscheidungsgründen mit alphanumerisch ergänzten Bezugszeichen versehen. Diese zweite Ausgestaltung unterscheidet sich nur geringfügig von der ersten Ausführung. Sie unterscheidet sich lediglich in der Ausgestaltung der Erhebungen 36A, 36B, 36C, im vorliegenden Ausführungsbeispiel in ihren Breiten b₁, b₂, b₃. Die zwischen den Erhebungen 36A, 36B, 36C angeordneten schlitzförmigen Ausnehmungen 37 sind alle identisch. Da sich die Erhebungen 36A, 36B, 36C und schlitzförmigen Ausnehmungen 37 in radialer Richtung erstrecken, weisen sie am äußeren Durchmesser D_{A} der ringförmigen Seitenfläche 35 eine größere Breite auf als am inneren Durchmesser D_{I} der ringförmigen Seitenfläche 35. Die Position der Breiten-Angabe in der Figur 4 ist daher nur beispielhaft zu verstehen. Es versteht sich von selbst, dass auch mehr als nur drei Gruppen von unterschiedlichen Erhebungen 36A, 36B, 36C vorhanden sein können.

Ebenfalls beispielhaft ist die Abfolge der drei unterschiedlich breiten Erhebungen 36A, 36B, 36C dargestellt. Diese Abfolge wiederholt sich über die ganze ringförmige Seitenfläche 35. Selbstverständlich können anstelle der Erhebungen 36 die schlitzförmigen Ausnehmungen 37 unterschiedliche Breiten aufweisen. Eine weitere Möglichkeit besteht darin, dass sowohl die Erhebungen 36 als auch die schlitzförmigen Ausnehmungen 37 eine Abfolge unterschiedlicher Breiten aufweisen. Durch die unterschiedlichen Breiten kann der Sensor 22 einen Signalverlauf mit unterscheidbaren Amplitudenbreiten aufzeichnen. Aus der Abfolge der unterschiedlichen Amplitudenbreiten kann die Drehrichtung bestimmt werden. Hierdurch ist nur ein Sensor 22 erforderlich.

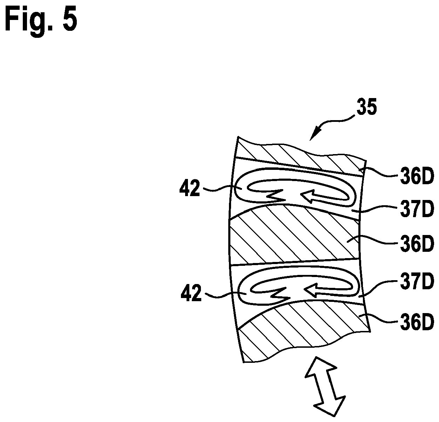

Figur 5 veranschaulicht eine dritte mögliche Ausgestaltung der auf der ringförmigen Seitenfläche 35 speziell ausgestalteten schlitzförmigen Ausnehmungen 37D und der dazwischenliegenden Erhebungen 36D. Dargestellt ist wiederum nur ein Segment der ringförmigen Seitenfläche 35. Wie in Figur 4, sind auch in Figur 5 der besseren Übersicht wegen die Erhebungen 36D im Schnitt dargestellt. Durch die spezielle Formgebung der schlitzförmigen Ausnehmungen 37D lässt sich eine wirbelförmige Luftströmung 42 innerhalb dieser erzeugen. Diese wirbelförmige Luftströmung 42 befördert ebenfalls Staub und Schmutz aus den schlitzförmigen Ausnehmungen 37D.

Obwohl die Erfindung durch die Darstellung spezifischer Ausführungsbeispiele beschrieben worden ist, ist es offensichtlich, dass zahlreiche weitere Ausführungsvarianten in Kenntnis der vorliegenden Erfindung geschaffen werden können, beispielsweise indem die Erhebungen mit zusätzlichen Elementen wie Muster Barcodes, Matrixcodes, Farbelementen und dergleichen mehr versehen werden, die zusätzlich vom mindestens einen Sensor zusätzlich erfasst werden können. Des Weiteren sind auch eine Vielzahl von Strömungsleitkörper- Varianten und eine Vielzahl anderer Ausgestaltungen von strömungsoptimierten schlitzförmigen Ausnehmungen möglich.

## Patentansprüche

1. Personentransporteinrichtung (1) die als Fahrtreppe oder Fahrsteig ausgebildet ist, aufweisend mindestens ein Antriebskettenrad (17) zum Antreiben und Umlenken eines Transportbandes (26) und weiter aufweisend mindestens eine Erfassungseinrichtung (20) zur Erfassung der Drehgeschwindigkeit des Antriebskettenrades (17), **dadurch gekennzeichnet, dass** an mindestens einer ringförmigen Seitenfläche (35) des Antriebskettenrades (17) schlitzförmige Ausnehmungen (37) angeordnet sind, wobei die Längserstreckung der schlitzförmigen Ausnehmungen (37) sich bezogen auf den Rotationsmittelpunkt des Antriebskettenrades (17) in radialer Richtung zumindest teilweise über die ringförmige Seitenfläche (35) erstrecken und wobei durch die Erfassungseinrichtung (20) mittels einer Abtastung der relativ zur Erfassungseinrichtung (20) bewegbaren schlitzförmigen Ausnehmungen (37) und der zwischen den schlitzförmigen Ausnehmungen (37) vorhandenen Erhebungen (36) ein die Drehgeschwindigkeit repräsentierendes Signal erzeugbar ist.

2. Personentransporteinrichtung (1) nach Anspruch 1, wobei alle schlitzförmigen Ausnehmungen (37) dieselbe Schlitzform aufweisen.

3. Personentransporteinrichtung (1) nach Anspruch 1 oder 2, wobei die schlitzförmigen Ausnehmungen (37) über ihre gesamte Längserstreckung einen strömungsoptimierten Querschnitt aufweisen, indem Flächenübergänge der schlitzförmigen Ausnehmungen (37) mit Ausrundungen versehen sind.

4. Personentransporteinrichtung (1) nach einem der Ansprüche 1 bis 3, wobei die schlitzförmigen Ausnehmungen (37) eine Schlitzbreite von 3mm bis 10mm, eine Schlitzlänge von 25mm bis 60mm und eine Schlitztiefe von 5mm bis 15mm aufweisen.

5. Personentransporteinrichtung (1) nach einem der Ansprüche 1 bis 4, wobei die schlitzförmigen Ausnehmungen (37) durch eine Vielzahl an der ringförmigen Seitenfläche (35) angeordnete Erhebungen (36) gebildet sind.

6. Personentransporteinrichtung (1) nach Anspruch 5, wobei die Erhebungen (36) eine Breite von 3mm bis 20mm, eine Länge von 25mm bis 60mm und eine Tiefe von 5mm bis 15mm aufweisen.

7. Personentransporteinrichtung (1) nach Anspruch 5 oder 6, wobei alle Erhebungen (36) dieselbe Form aufweisen.

8. Personentransporteinrichtung (1) nach Anspruch 5 oder 6, wobei Erhebungen (36) in drei Gruppen mit unterschiedlicher Breite (b₁, b₂, b₃) aufgeteilt sind, wobei alternierend jeweils eine Erhebung (36A) der ersten Breite (b₁) gefolgt von einer Erhebung (36B) der zweiten Breite (b₂) und gefolgt von einer Erhebung (36C) der dritten Breite (b₃) am Antriebskettenrad (17) angeordnet sind.

9. Personentransporteinrichtung (1) nach einem der Ansprüche 5 bis 8, wobei das Antriebskettenrad (17) einen scheibenförmigen Radkörper (31) und einen in axialer Richtung vom scheibenförmigen Radkörper (31) überstehenden Außenring (32) aufweist, wobei die Erhebungen (36) zur Versteifung des Übergangs zwischen dem Außenring (32) und dem scheibenförmigen Radkörper (31) angeordnet sind.

10. Personentransporteinrichtung (1) nach Anspruch 9, wobei am Außenring (32) umfangseitig eine Verzahnung (33) zum Eingriff in eine Antriebskette (13) ausgebildet ist.

11. Personentransporteinrichtung (1) nach einem der Ansprüche 5 bis 10, wobei das Antriebskettenrad (17) mittels eines Gießverfahrens hergestellt ist, wobei die Erhebungen (36) mitgegossen sind.

12. Personentransporteinrichtung (1) nach Anspruch 11, wobei mittels eines spanabhebenden Bearbeitungsverfahrens die Erhebungen (36) parallel zur ringförmigen Seitenfläche (35) bearbeitet sind.

13. Personentransporteinrichtung (1) nach einem der Ansprüche 1 bis 12, wobei zumindest ein Strömungsleitkörper (40) vorhanden ist, der die in seinem Bereich vorhandenen schlitzförmigen Ausnehmungen (37) teilweise überdeckt und dadurch mit diesen, Ventilationskanäle bildet.

14. Personentransporteinrichtung (1) nach einem der Ansprüche 1 bis 13, wobei die Erfassungseinrichtung (20) mindestens einen Sensor (22, 23) beinhaltet, dessen Signal direkt oder aufbereitet an eine Steuerung (14) der Personentransporteinrichtung (1) übermittelbar ist.

15. Personentransporteinrichtung (1) nach Anspruch 14, wobei die Erfassungseinrichtung (20) eine Schnittstelle zu einem Busknoten eines Bussystems (21) der Personentransporteinrichtung (1) aufweist, welches Bussystem (21) mit der Steuerung (14) der Personentransporteinrichtung (1) verbunden ist.

## Claims

1. Passenger transport device (1) which is designed as an escalator or moving walkway, comprising at least one drive sprocket (17) for driving and deflecting a conveyor belt (26) and further comprising at least one detection device (20) for detecting the rotational speed of the drive sprocket (17), **characterized in that** slot-shaped recesses (37) are arranged on at least one annular lateral face (35) of the drive sprocket (17), the longitudinal extension of the slot-shaped recesses (37) extending at least partially over the annular lateral face (35) in the radial direction with respect to the center of rotation of the drive sprocket (17), and it being possible for a signal representing the rotational speed to be generated by the detection device (20) by means of scanning the slot-shaped recesses (37) which are movable relative to the detection device (20) and the elevations (36) present between the slot-shaped recesses (37).

2. Passenger transport device (1) according to claim 1, wherein all of the slot-shaped recesses (37) have the same slot shape.

3. Passenger transport device (1) according to either claim 1 or claim 2, wherein the slot-shaped recesses (37) have a flow-optimized cross section over the entire longitudinal extension thereof, due to surface transitions of the slot-shaped recesses (37) being provided with fillets.

4. Passenger transport device (1) according to any of claims 1 to 3, wherein the slot-shaped recesses (37) have a slot width of 3 mm to 10 mm, a slot length of 25 mm to 60 mm and a slot depth of 5 mm to 15 mm.

5. Passenger transport device (1) according to any of claims 1 to 4, wherein the slot-shaped recesses (37) are formed by a plurality of elevations (36) arranged on the annular lateral face (35).

6. Passenger transport device (1) according to claim 5, wherein the elevations (36) have a width of 3 mm to 20 mm, a length of 25 mm to 60 mm and a depth of 5 mm to 15 mm.

7. Passenger transport device (1) according to either claim 5 or claim 6, wherein all of the elevations (36) have the same shape.

8. Passenger transport device (1) according to either claim 5 or claim 6, wherein the elevations (36) are divided into three groups having different widths (bi, b₂, b₃), wherein an elevation (36A) of the first width (b₁) followed by an elevation (36B) of the second width (b₁) and followed by an elevation (36C) of the third width (b₃) are, in each case, arranged on the drive sprocket (17) in an alternating manner.

9. Passenger transport device (1) according to any of claims 5 to 8, wherein the drive sprocket (17) has a disc-shaped wheel body (31) and an outer ring (32) protruding in the axial direction from the disc-shaped wheel body (31), wherein the elevations (36) are arranged so as to reinforce the transition between the outer ring (32) and the disc-shaped wheel body (31).

10. Passenger transport device (1) according to claim 9, wherein a toothing (33) for engaging in a drive chain (13) is formed on the circumference of the outer ring (32).

11. Passenger transport device (1) according to any of claims 5 to 10, wherein the drive sprocket (17) is produced by means of a casting process, wherein the elevations (36) are cast simultaneously.

12. Passenger transport device (1) according to claim 11, wherein the elevations (36) are machined parallel to the annular lateral face (35) by means of a machining process.

13. Passenger transport device (1) according to any of claims 1 to 12, wherein at least one flow guide body (40) is provided which partially covers the slot-shaped recesses (37) present in the region thereof and thereby forms ventilation channels with said recesses.

14. Passenger transport device (1) according to any of claims 1 to 13, wherein the detection device (20) contains at least one sensor (22, 23), the signal of which can be transmitted to a controller (14) of the passenger transport device (1) in a direct or processed manner.

15. Passenger transport device (1) according to claim 14, wherein the detection device (20) has an interface to a bus node of a bus system (21) of the passenger transport device (1), which bus system (21) is connected to the controller (14) of the passenger transport device (1).

## Revendications

1. Dispositif de transport de personnes (1) réalisé sous la forme d'un escalier ou d'un trottoir roulant, comportant au moins un pignon d'entraînement (17) destiné à entraîner et à dévier une bande transporteuse (26) et comportant en outre au moins un dispositif de détection (20) permettant de détecter la vitesse de rotation du pignon d'entraînement (17), **caractérisé en ce que** des évidements en forme de fentes (37) sont disposés sur au moins une surface latérale annulaire (35) du pignon d'entraînement (17), dans lequel l'extension longitudinale des évidements en forme de fentes (37), par rapport au centre de rotation du pignon d'entraînement (17), s'étend dans la direction radiale au moins en partie sur la surface latérale annulaire (35), et dans lequel un signal représentant la vitesse de rotation peut être produit par le dispositif de détection (20) au moyen d'un balayage des évidements en forme de fentes (37) qui sont mobiles par rapport au dispositif de détection (20) et des élévations (36) présentes entre les évidements en forme de fentes (37).

2. Dispositif de transport de personnes (1) selon la revendication 1, dans lequel tous les évidements en forme de fentes (37) présentent la même forme de fente.

3. Dispositif de transport de personnes (1) selon la revendication 1 ou 2, dans lequel les évidements en forme de fentes (37) présentent une section transversale optimisée pour l'écoulement sur toute leur étendue longitudinale, par la dotation des transitions de surface des évidements en forme de fentes (37) d'arrondissages.

4. Dispositif de transport de personnes (1) selon l'une des revendications 1 à 3, dans lequel les évidements en forme de fentes (37) ont une largeur de fente de 3 à 10 mm, une longueur de fente de 25 à 60 mm et une profondeur de fente de 5 à 15 mm.

5. Dispositif de transport de personnes (1) selon l'une des revendications 1 à 4, dans lequel les évidements en forme de fentes (37) sont formés par une pluralité d'élévations (36) disposées sur la surface latérale annulaire (35).

6. Dispositif de transport de personnes (1) selon la revendication 5, dans lequel les élévations (36) ont une largeur de 3 à 20 mm, une longueur de 25 à 60 mm et une profondeur de 5 à 15 mm.

7. Dispositif de transport de personnes (1) selon la revendication 5 ou 6, dans lequel toutes les élévations (36) présentent la même forme.

8. Dispositif de transport de personnes (1) selon la revendication 5 ou 6, dans lequel des élévations (36) sont divisées en trois groupes de largeurs différentes (bi, b₂, b₃), dans lequel alternativement dans chaque cas une élévation (36A) de la première largeur (b1) suivie d'une élévation (36B) de la deuxième largeur (b₂) et suivie d'une élévation (36C) de la troisième largeur (b3) sont disposées au niveau du pignon d'entraînement (17).

9. Dispositif de transport de personnes (1) selon l'une des revendications 5 à 8, dans lequel le pignon d'entraînement (17) comporte un corps de roue en forme de disque (31) et un anneau extérieur (32) faisant saillie dans la direction axiale du corps de roue en forme de disque (31), dans lequel les élévations (36) destinées à la rigidification de la transition entre l'anneau extérieur (32) et le corps de roue en forme de disque (31) sont disposés.

10. Dispositif de transport de personnes (1) selon la revendication 9, dans lequel une denture (33) destinée à venir en prise dans une chaîne d'entraînement (13) est réalisée au niveau de la circonférence de l'anneau extérieur (32).

11. Dispositif de transport de personnes (1) selon l'une des revendications 5 à 10, dans lequel le pignon d'entraînement (17) est réalisé au moyen d'un procédé de coulée, dans lequel les élévations (36) sont coulées conjointement.

12. Dispositif de transport de personnes (1) selon la revendication 11, dans lequel les élévations (36) sont usinées parallèlement à la surface latérale annulaire (35) au moyen d'un processus d'usinage par enlèvement de copeaux.

13. Dispositif de transport de personnes (1) selon l'une des revendications 1 à 12, dans lequel au moins un corps de guidage d'écoulement (40) est prévu, lequel au moins un corps de guidage d'écoulement recouvre en partie les évidements en forme de fentes (37) prévus dans sa région et forme ainsi des canaux de ventilation avec eux.

14. Dispositif de transport de personnes (1) selon l'une des revendications 1 à 13, dans lequel le dispositif de détection (20) renferme au moins un capteur (22, 23) dont le signal peut être transmis directement ou élaboré au niveau d'un dispositif de commande (14) du dispositif de transport de personnes (1).

15. Dispositif de transport de personnes (1) selon la revendication 14, dans lequel le dispositif de détection (20) comporte une interface avec un nœud de bus d'un système de bus (21) du dispositif de transport de personnes (1), lequel système de bus (21) est connecté au dispositif de commande (14) du dispositif de transport de personnes (1).
